# EUROPEAN PATENT SPECIFICATION

(11) **EP 3 000 771 B1**
(45) Date of publication and mention of the grant of the patent: **22.11.2017**
(21) Application number: 14186471.0
(22) Date of filing: 25.09.2014
(51) Int. Cl.: B66F 9/075, G05D 1/02, B66F 9/24

(54) **Fork-lift truck**
Gabelstapler
Chariot élévateur à fourche

(43) Date of publication of application: 30.03.2016
(73) Proprietor: Toyota Material Handling Manufacturing Sweden AB, 595 81 MJÖLBY (SE)
(72) Inventor: Svensson, Rune, 590 19 Mantorp (SE); Persson, Magnus, 58255 Linköping (SE); Håkan, Frid, 595 52 mjölby (SE)
(74) Representative: Zacco Sweden AB

(56) References cited:
- EP-A1- 2 468 678
- WO-A2-2011/108944
- US-A1- 2004 073 359

## Description

### TECHNICAL FIELD

The present invention relates to a fork-lift truck according to the preamble of claim 1, a method of operating a fork-lift truck according to claim 13, a method of modifying a fork lift truck according to claim 19 and a computer program product according to claim 20.

### BACKGROUND ART

From US 2004/0073359 it is known to use a camera for picking up an image of a cargo handling target and acquire an image data of a mark affixed to the cargo handling target. The discussed fork-lift of this document uses cargo handling targets for position control.

### SUMMARY OF THE INVENTION

The prior art discusses the usage of cargo handling targets in order to achieve positioning when approaching a cargo. However the prior art does not discuss how to avoid bad position control. For example the prior art fork-lift truck cannot position itself if a cargo handling target is missing. The prior art is also dependent of that the cargo handling target is positioned at a predetermined position. Therefore it is an object of the present disclosure to disclose a more flexible and advantageous solution that can provide at least a partial solution to the inconveniences with the prior art.

At least parts of the problems with the prior art are solved by the fork-lift truck according to claim 1. Preferred embodiments are defined in the dependent claims.

According to an aspect of the present disclosure, the object is achieved by a fork-lift truck comprising a load carrier, an optical detector having a first field of view and arranged to provide an output, wherein the optical detector is movable together with the load carrier, an optical analysing unit arranged to analyse the output from said optical detector so as to identify a first three-dimensional object, said first three-dimensional object being the load carrier, and a second three-dimensional object based on the output from the optical detector, and wherein the optical analysing unit is further arranged to analyse the output from the optical detector so as to determine the three-dimensional position of the identified load carrier relative to the identified second three-dimensional object.

The effect of this solution is that no marking of the second three-dimensional object is needed. A further effect is that if the optical detector is dislocated slightly, no recalibration will be needed as it assesses the relative position between the first three-dimensional object, i.e. the load carrier, and the second three-dimensional object locally. This provides a very rough and reliable solution.

One advantage with this solution is that automatic pallet handling can be facilitated.

One advantage with this solution is that the time and/or instances needed for manual interception in automated processes can be minimized.

One advantage with this solution is that it is flexible and can be adopted to different situations. Further, at least small deficiencies between expected positions of objects, like cargos and rackings in a warehouse, and real positions of these objects can be corrected.

According to one option, the optical detector is a 3D camera arranged to output three-dimensional data, preferably a 3D-camera working on the time-of-flight principle.

The effect of having a 3D camera is that no special provisions need to be made to the cargo, racking or other objects that is to be detected, as the optical analysing unit can make determinations and assessments directly from the output from the 3D camera.

According to one option, the optical analysing unit is integrated into the optical detector.

This is particularly advantageous as the transfer between the optical detector and the optical analysing unit is simplified and need not be done by cable over the mast to the fork-lift truck body or by means of wireless transfer. Also, if the optical detector is upgraded it is convenient to upgrade the optical analysing unit at the same time.

According to one option, the load carrier comprises at least one fork.

The discussed disclosure is particularly advantages for fork-type load carriers. The optical detector and the optical analysing unit are surprisingly effective in determining the position of a load carrier being a fork.

According to one option, the optical detector is positioned on a rear part of the load carrier adjacent to a mast or a fork-lift truck body of the fork-lift truck.

The position of the optical detector is particularly important as it is an advantage to be able to determine the position of both the load carrier and a load by the optical detector. By performing this momentary calibration of the relative position of the load carrier and the load is obtained. Thus a slightly dislocated optical detector does not interfere with the determination of the relative position, as long as both the load carrier and the load is within view of the optical detector.

According to one option, the fork-lift truck further comprises a load carrier control unit operatively connected to the optical analysing unit and arranged to adjust the position of the load carrier based on the determined three-dimensional position of the identified load carrier relative to the identified second three-dimensional object.

It is a particular advantage if the fork-lift truck, either being completely autonomous or manually operated, can have the load carrier adjusted automatically to a predetermined position. The predetermined position is preferably the position where the load carrier then can pick up a load. This has ergonomic advantages for an operator. It is a particularly important feature for an autonomous fork-lift truck.

According to one option, the load carrier control unit is arranged to adjust the position of the load carrier in all three-dimensions if needed, preferably in a direction that is transversal to the fork-lift truck body and/or in the longitudinal direction and/or the height direction relative to said second three-dimensional object.

This provides for that the load carrier actually can be repositioned for picking up essentially any load.

According to one option, the load carrier control unit is comprised within a master control unit of the truck.

This has the advantage that the fork-lift truck can have a simplified design, where the load carrier control unit does not need its own hardware. Thus an upgrade of the load carrier control unit is particularly simple.

According to one option, the optical analysing unit is comprised within a master control unit of the fork-lift truck.

This has the advantage that the fork-lift truck can have a simplified design, where the optical analysing unit does not need its own hardware. Thus an upgrade of the optical analysing unit is particularly simple.

According to one option, the second three-dimensional object is a load.

According to one option, the optical analysing unit is arranged to identify a predetermined section of the load, such as a pallet and/or at least one pallet tunnel.

As the pallet often has a standardized shape and dimension, it is particularly advantageous for detection. It is a particular advantage to be able to detect a pallet tunnel as the load carriers usually needs to engage the pallet tunnel for lifting a load.

According to one option, the optical detector is arranged to be movable in relation to the load carrier between a first position and/or orientation with the first field of view and a second position and/or orientation with a second field of view, where the second field of view includes a space above the second three-dimensional object such that in the second field of view objects can be detected which are outside the first field of view, or, alternatively, the first field of view includes a space above the second three-dimensional object and wherein the position of the load carrier is detectable in the first field of view when the second three-dimensional object is not present on the load carrier.

By applying a movable optical detector, the fork-lift truck can perform further tasks that a fixed optical detector cannot. In particular it can perform detection over a load for crash detection purposes and also detect whether a slot in a racking is free or occupied. The same tasks can be performed by applying a particularly broad field of view of the optical detector. Then the movability can be optional and a more simple solution can be achieved.

According to an aspect of the invention, the object is achieved by a method of operating a fork-lift truck, said fork-lift truck comprising an optical detector having a first field of view. The method comprises the steps of obtaining an output from the optical detector, and of identifying a first three-dimensional object in said field of view of the optical detector and determining its position, said first three-dimensional object being a load carrier of the fork-lift truck, based on the output from the optical detector. The method also comprises the steps of identifying a second three-dimensional object in said field of view of the optical detector and determining its position based on the output from the optical detector, and of determining a three-dimensional relative position of the identified second three-dimensional object in relation to the position of the identified load carrier based on the determined position of the load carrier and the determined position of the second three-dimensional object.

The method has the advantages as mentioned, i.e. that no marking of the load is needed. A further effect is that if the optical detector is dislocated slightly, no recalibration will be needed as it assesses the relative position between the first and second three-dimensional object locally. This provides a very rough and reliable solution.

According to embodiments of the present disclosure the output from the optical detector is received by at least one optical analysing unit, wherein a predetermined volume is within said first field of view of the optical detector, and where a search is performed by said at least one optical analysing unit within said predetermined volume so as to identify said load carrier and/or second three-dimensional object and so as to determine the position of said load carrier and/or second three-dimensional object.

This has a particular advantage as it speeds up the detection of the first and second objects. It has also the advantage that it makes the determination more precise.

According to embodiments of the present disclosure the output from the optical detector is received by at least one optical analysing unit, wherein a first predetermined volume is within said first field of view of the optical detector and where a search is performed by said at least one optical analysing unit within said first predetermined volume so as to identify said load carrier and so as to determine the position of said load carrier, and
wherein a second predetermined volume is within said first field of view of the optical detector and where a search is performed by said at least one optical analysing unit within said second predetermined volume so as to identify said second three-dimensional object and so as to determine the position of said second three-dimensional object.

This has a particular advantage in that it adjust the volume to be searched for determining of different objects thus further increasing the speed and precision when detecting two objects and their relative position.

According to preferred embodiments of the present disclosure, the method further comprises the steps of calculating a difference between said determined three-dimensional relative position of the identified second three-dimensional object and a predetermined three-dimensional relative position of the identified second three-dimensional object, applying the calculated difference to a load carrier control unit, and controlling by means of the load carrier control unit repositioning of the load carrier based on the calculated difference.

The effect of these steps is that an automatic adjustment of the load carrier's relative position to the second three-dimensional object is obtained. Thus the ergonomics for an operator is improved, as he does not need to perform the adjustments himself. The steps are particularly important for the invention if an autonomous fork-lift is to pick up a load.

According to embodiments of the present disclosure, the optical detector is arranged to be movable in relation to the load carrier between a first position and/or orientation with the first field of view and a second position and/or orientation with a second field of view, such that in the second field of view objects can be detected which are outside the first field of view, or, alternatively, the first field of view includes a space above the second three-dimensional object and wherein the position of the load carrier is detectable when the second three-dimensional object is not present on the load carrier. The method then further comprises the steps of starting a lifting procedure of the load carrier and during this process detect within the second field of view, or the first field of view including the space above the second three-dimensional object, by the optical detector whether any object protrudes in the lifting path such that it can collide with the load carrier or the load, and if a protruding object is detected, taking measures and/or alarming in order to prevent a collision.

The advantage of this method is that a lifting of a load is made safer, both when the fork-lift truck is operated manually by an operator and if the fork-lift truck is performing the lifting operation independently.

According to embodiments of the present disclosure the optical detector is arranged to be movable in relation to the load carrier between a first position and/or orientation with the first field of view and a second position and/or orientation with a second field of view, such that in the second field of view objects can be detected which are outside the first field of view, or, alternatively, the first field of view includes a space above the second three-dimensional object and wherein the position of the load carrier is detectable when the second three-dimensional object is not present on the load carrier. The method then further comprises the steps of approaching a predetermined position where a load is to be delivered, optionally attaining the second position and/or orientation with the second field of view by the optical detector, detecting a slot where the load is to be delivered within the second field of view or the first field of view including the space above the second three-dimensional object, determining by means of said at least optical analysing unit whether the slot allows delivering or not depending on if the slot is empty, contains a load, or there are other obstructing means in this slot, and, if it is determined in the previous step to allow delivery, providing a visual indication or positioning the cargo in the empty slot.

This has the advantage that the cargo is not positioned in a slot where there is not enough space for it to be delivered. Therefore damages and/or dangerous situations can be avoided. This is particularly relevant if the truck is autonomous or if the slot is out of view for an operator.

According to an aspect of the invention, the object is achieved by a method of modifying a fork-lift truck comprising the steps of providing a fork-lift truck, providing an optical detector, providing an optical analysing unit, applying the optical detector and said optical analysing unit to said forklift truck such that a forklift truck according to the above is provided.

This has the advantage that the fork-lift truck of the invention can be an older fork-lift truck that is modified, such that the invention can be provided by already produced fork-lift trucks.

According to an aspect of the invention, the object is achieved by a computer program product that, when executed in an optical analysing unit of a fork-lift truck according to the above or an optical analysing unit together with a load carrier control unit of a fork lift truck according to the above, executes the method according to the above.

### BRIEF DESCRIPTION OF THE DRAWINGS

Fig. 1: Fork-lift truck according to a first embodiment of the invention.
Fig. 2: Fork-lift truck according to a second embodiment of the invention.
Fig. 3: Method according to the invention.
Fig. 4: Fork-lift truck according to the second embodiment.
Fig. 5: Racking with empty slot regarding positioning of load.
Fig. 6: An optical detection unit according to the invention.

### DETAILED DESCRIPTION

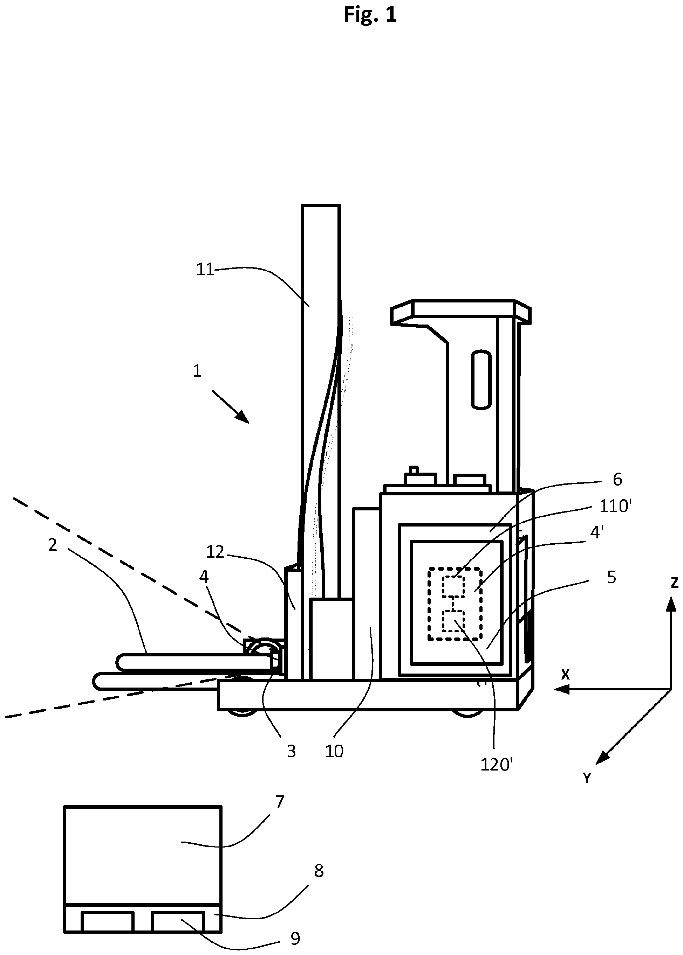

The present invention relates to the area of fork-lift trucks 1, such as disclosed in Figure 1. In particular it relates to fork-lift trucks 1 that are electrical and used within a warehouse. Even more particular it relates to fork-lift trucks that are arranged such that they can navigate and move autonomously within a warehouse, for material handling reasons. Still it should be understood that the fork-lift truck 1 can be both autonomous and be manually operated. Also for a manually operated fork-lift truck 1 the invention applies. For an autonomous fork-lift truck the warehouse is preferably provided with a general guidance system that makes it possible for an automated truck to move and navigate for example down to +/- 10 cm and, depending on the system used, even down to +/-10 mm of a predetermined position. The system can for example make use of laser guidance or a combination of laser guidance and wire/rail guidance. There are other techniques of guidance and positioning that can be implemented together with the present invention, for example SLAM, simultaneous localization and mapping. Further techniques are for example magnets in the floor, or RFID tag technology etc.

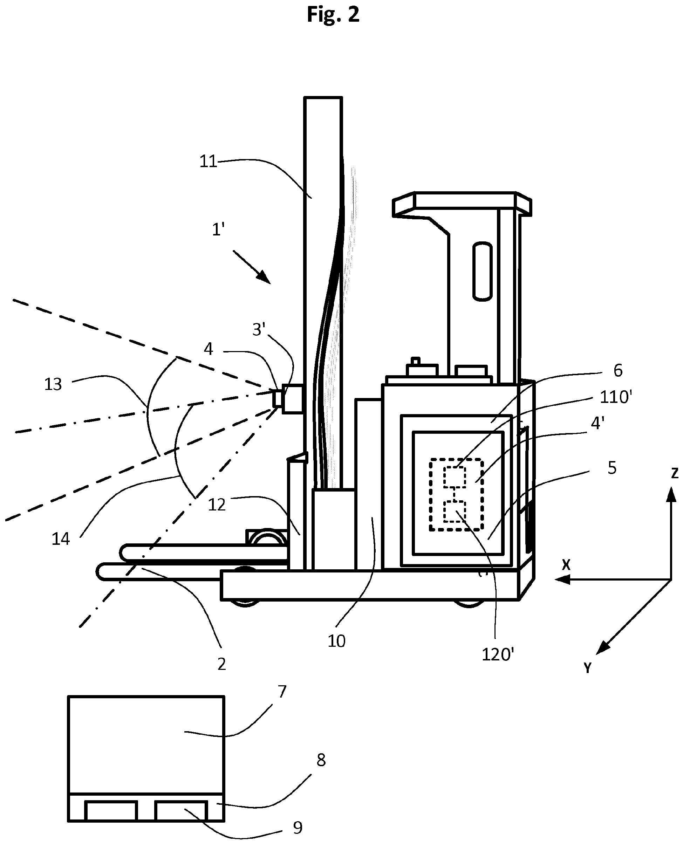

The fork-lift truck 1 includes a load carrier 2, as seen in Figure 1 and 2. The load carrier could have only one fork, but in general there are two forks included in the load carrier. In Fig. 1 and 2 it should, for example, be understood that the load carrier 2 comprises both forks. The load carrier 2 is attached to a lifting mechanism such that the forks can move vertically. The load carrier 2 is also provided with hydraulics such that it can move in the lateral direction of the fork-lift truck 1. The fork-lift truck 1 is in general provided with a mast 11. However the present invention is not limited to fork-lift trucks having a mast 11. It is quite conceivable to apply the invention to a fork-lift truck 1 that is a low lifting truck, for example a low lifting tiller arm truck, not having a mast. The fork-lift truck 1 comprises a fork-lift truck body 10. The fork-lift truck body 10 is defined as remaining part of the fork-lift truck 1 when the load carriers 2 and an optional mast 11 are removed. The fork-lift truck 1 in general also comprises a drive motor that is used for driving a drive wheel and thus moving the fork-lift truck 1 in a desired direction. The fork-lift truck 1 further comprises a motor for driving a hydraulic pump; hereinafter we call this motor the pump motor. The hydraulic pump pressurises a hydraulic system of the fork-lift truck 1. The hydraulic system of the fork-lift truck 1 is used for the hydraulic functions of the truck in a manner known to a person skilled in the art. Example of functions that is handled by the hydraulic system is lifting of the load carriers 2, side shift of the load carriers 2, and longitudinal movement of the mast 11 if the fork-lift truck 1 is a reach truck, tilting of the load carriers 2 in the longitudinal direction. In another example side shift of the load carrier 2 and/or tilting of the load carrier 2 are performed by electrical motors. The drive motor and the pump motor are for the discussed type of fork-lift trucks electrically powered by an energy source. The energy source is in general a suitable rechargeable battery. However it should be understood that the present invention can be used with any type of fork-lift truck that mostly travels within a warehouse. If the invention is to be used on other industrial vehicles comprising load carriers in the form of forks, modifications can be needed as the surroundings alters, and differences in design of their respective lifting mechanisms. However, the use of what is written in this disclosure in other industrial vehicles comprising load carriers is also part of this invention.

The fork-lift truck 1 is provided with an optical detector 3. The optical detector 3 is preferably a 3D-camera. With the expression 3D-camera is meant a camera that can provide an output that makes it possible to assess the position of coordinates in a volume with x, y, and z coordinates. 3D stands for three-dimensions. The camera is preferably provided with illumination possibilities such that if the surroundings are dark the camera itself can achieve a sufficient lighting for providing a correct output. As an example a 3D-camera can work on the so-called time-of-flight (TOF) principle, which is known in the art. The optical detector 3 has in one example an angle of view that is in the range of 20° to 180°, preferably 35° to 70°. The 3D-camera should not be confused with a stereo camera having two lenses. The 3D-camera has in general only one lens and uses digital technology to analyse the received optical data and is in general provided with an optical analysing unit 4, 4' to provide said coordinates x, y, z of objects that are detected through the single lens.

The optical detector 3 on a fork-lift truck 1 with a mast 11 is positioned close to the back of a load carrier sledge 12, see Figure 1. From this position it can view the load carrier 2 and also a load 7, i.e. a first and second three-dimensional object. The load carrier sledge 12 moves together with the load carrier 2, in the height direction. Thus the optical detector 3 is movable with the load carrier 2.

Below an alternative position of the optical detector 3' is described, see Figure 2. It should be understood that the optical detectors 3 and 3' are essentially the same, and have the same functions etc. Therefore, everything described in this disclosure in relation to the optical detector 3 applies also to the optical detector 3', as long as it is not explicitly stated differently, as for example for position and/or orientation of the optical detector 3'.

The optical analysing unit 4, 4' is arranged to be able to receive an output from the optical detector 3. The optical analysing unit 4, 4' can assess the position of objects in a volume that is covered by the angle of view of the optical detector 3.

A load carrier control unit 5 controls the hydraulics system of the fork-lift truck 1. The load carrier control unit 5 is also arranged to be able to control a drive motor for a movement of the load carrier in particular in a longitudinal direction of the fork-lift truck 1. But the load carrier control unit 5 also controls other functions for altering position of the load carriers 2, such as controlling a reach function of a fork-lift truck 1 that comprises such a function, the lift function, the side shift function etc. The load carrier control unit 5 can be fully integrated into a main control unit (MCU) 6 of the fork-lift truck 1. This provides for a simple solution and provides for less hardware needed on the fork-lift truck 1. The load carrier control 5 unit can also be an independent control unit 5 (not shown in the figures). This will make service of the load carrier control unit 5 simpler and will make upgrades of it easier to perform. In one example the load carrier control unit 5 is positioned close to the load carrier 2, for example close to the load carrier sledge 12. This has the advantage that the load carrier control unit 5 can act as a kind of interface which on one side collects all information and data regarding the load carrier 2 and provides these data to the MCU 6, for example via a so called controller area network (CAN) bus. This collected information and data can for example originate from the elements 4, 4', 3, and 3'. On the other hand the load carrier control unit could then receive instructions from the MCU 6, for example via the CAN-bus, about how the load carrier 2 should be operated. These instructions could for example comprise a change of position of the load carrier 2 in relation to the truck body 10, such as an instruction to lift the load carrier 2. However, it should be understood that the placement of the load carrier control unit 5 for taking advantage of this disclosure is not limited to any of the above named places on the fork-lift truck 1.

The optical analysing unit 4' can be part of the load carrier control unit 5 or/and the master control unit 6 of a fork-lift truck 1, as can be seen in Figure 1 with reference number 4'. This provides for a particular simple and cost effective solution. The optical analysing unit can be an individual hardware that is not part of any other control unit of the fork-lift truck 1. The latter arrangement provides for that maintenance of the optical analysing unit is simplified. In a preferred embodiment the optical analysing unit 4 is integrated in the optical detector 3. This is particularly advantageous as the raw output of the optical detector 3 does not need to be linked far through the optional mast 11 of the fork-lift truck 1. Thus this optical analysing unit 4 integrated into the optical detector 3 means that transfer of the output over a distance is not needed and thus problems with wiring and also problem of transfer of large image files is avoided.

The main aspects of the functions of the fork-lift truck 1 will now be described in preferred embodiment.

A fork-lift truck 1 positions itself within a vicinity of a load 7. The optical detector 3 is either on, or is turned on by the optical analysing unit 4, 4'. The optical analysing unit 4, 4' starts receiving an output from the optical detector 3. The optical analysing unit 4, 4' is arranged to process the received output. The optical analysing unit 4, 4' applies an algorithm to first detect a first three-dimensional object. The optical analysing unit 4, 4' preferably starts searching for the first three-dimensional object within a predetermined volume. This volume is preferably set not to extend further than the length of the load carrier 2 of the fork-lift truck 1. Within said volume the optical analysing unit 4, 4' uses the output to identify the first three-dimensional object to be the load carrier 2 of the fork-lift truck 1. As the load carrier 2 is identified, the optical analysing unit 4, 4' continues to evaluate the output, wherein it searches in a second predetermined volume for a second three-dimensional object. Preferably the optical analysing unit 4, 4' searches for a pallet tunnel 9 of a pallet 8. The optical analysing unit 4, 4' can also search for a corner or edge of the load 7. When the optical analysing unit 4, 4' has detected said pallet tunnel 9 or said corner or edge, the optical analysing unit 4, 4' performs an assessment of the position of the first three-dimensional object relative to the detected second three-dimensional object, by said optical analysing unit 4, 4'. The position is preferably described as a three-dimensional coordinate, X, Y, Z. When this is performed a determination, for example by calculation, is made to determine the difference between the assessed position of the first three-dimensional object and the assessed position of the second three-dimensional object. The optical analysing unit 4, 4' calculates a vector in space that essentially describes the repositioning needed to move the load carriers 2 such that they can lift the load 7.

If the second three-dimensional object is the pallet tunnel 9, defined by the walls of the pallet tunnel 9 and the surface the pallet 8 is resting on, the load carrier's 2 predetermined position to be achieved is in front of the pallet tunnel 9. The optical analysing unit 4, 4' thereafter sends a control command to the load carrier control unit 5. The load carrier control unit 5 can then reposition the load carriers 2 such that it first is positioned in front of the pallet tunnel 9. Then the load carrier control unit 5 can control the drive motor of the fork-lift truck 1 and move it forward such that the load carrier 2 enters the pallet tunnel 9. The load carrier control unit 5 can control valves and the pump motor and lift the pallet by means of the said load carrier 2. The above described function is of course applicable when using an edge or a corner of a load for performing the function. Then the optical analysing unit 4, 4' performs the calculation based on a predetermined position of the edge and corner and a known distance/position of the pallet tunnel 9.

It should be understood that the above functioning of the fork-lift truck 1 can be performed both from floor and from a pallet rack in a ware house, or at any position. The only demand is that the first three-dimensional object, i.e. the load carrier 2, and the second three-dimensional object is within the first and second predetermined volumes, respectively.

It is also possible to apply the present invention to any fork-lift truck 1 where a precise guiding is needed of the load carrier. For example a manually operated reach fork-lift truck can use the presented technology. It is of course a particular advantage to use the technology in a narrow isle fork-lift truck, in particular where the operator is operating from a man down position, with swivel forks. That is the operator is not manoeuvring from a cabin that is moving up and down with the load carriers. The swivel forks that can pick up loads in a 180 degree range by rotating the forks horizontally in front of the driver, thus it is particularly delicate to position such forks properly for picking up a load 7.

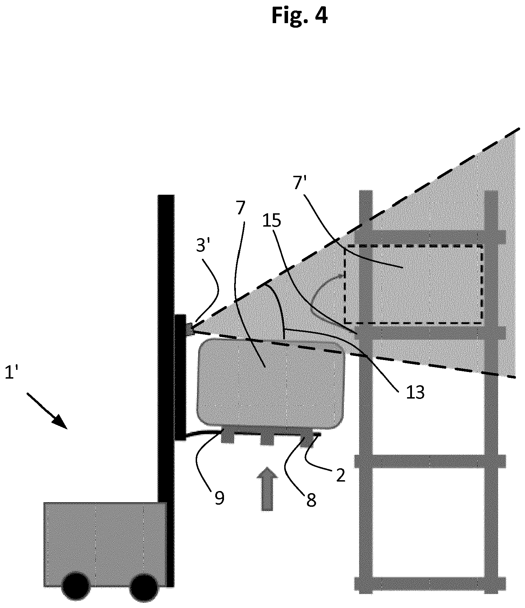

In a second embodiment of the fork-lift 1' truck according to the invention disclosed in Figure 2 all common features have the same reference numbers as of the first described embodiment, and all functions are the same except, for the position and/or orientation of the optical detector 3', and the possibility for it to alter between two positions and/or orientations with field of views 13 and 14, respectively, as shown in Figure 2 and 4. In this embodiment the optical detector 3' is positioned on the top of the back of the load carrier 2. This position gives the possibility, when operating the fork-lift truck 1', to view over a load in the second position and orientation with the field of view 13 and in the alternative first position and/or orientation with the field of view 14 the optical detector can perform all the tasks according to the first embodiment above. In the following, when refereeing to first position 14 or to second position 13 it should be understood that this is a shorthand notation for first position and/or orientation with a first field of view 14 and second position and/or orientation with a second field of view 13, respectively. When in the second position 13, the optical detector 3' can detect the individual racks of a racking when lifting a load. It can then as the load carrier carries a load, check on the way up that no load or rack is in the way for the lifting operation, see Figure 4. Thus, it can be safeguarded that the load on the load carrier or the load carrier itself does not collide with a rack or load already in the racking. The optical detector 3' can thus augment the safety of the fork-lift truck 1 in operation, as crash collision prevention can be obtained.

In order to also be able to perform the tasks already mentioned in relation with embodiment 1, the optical detector 3' is movable between at least two positions and/or orientations, or has an extended field of view. The mobility is preferably added by a motorised device that supports the optical detector 3'. This motorised device is preferably controlled by the optical analysing unit 4, 4'. Thus, when in position 14 the optical detector 3' acts as described in relation to Fig. 1. Especially the detector 3' in combination with the analysing unit 4, 4' will be able to identify the load carrier 2.

It should be understood that the effect of having the first position 14 and the second position 13 can, alternatively, be achieved by an optical detector 3' that has a field of view that allows to detect both over a load 7, if loaded, and also to detect the load carrier 2, if unloaded, without altering the position and/or orientation of the optical detector 3'. When referring to the expression "detect over a load" in this disclosure it should be understood that the field of view includes a space above the second three-dimensional object, such as indicated in Fig. 4. Preferably this space is directly above the second three-dimensional object. This is done in such a way that the optical detector 3' can see whether there are any objects above a potential load, up to a predetermined height above the load, or whether there are no such objects.

If the second three-dimensional object is on the load carrier 2, for example the second three-dimensional object being a load 7, 8 on the load carrier 2, and when referring to a field of view including a space above the second three-dimensional object, this means that a space in the vertical extension of the three-dimensional object on the load carrier 2 is in the field of view.

In general when referring to a space above an object this means a space in the vertical extension of the object. The field of view may in addition to the space above an object include also other space, for example a space in front of the object.

A preferred example of a method for crash detection will now be described in more detail:
A fork-lift truck 1' has picked up a load according to the procedure described with the second embodiment, where the optical detector 3' has been in position 14. The fork-lift truck 1' has now approached a racking, see Figure 4. The fork-lift truck 1' has found its position, for example by a general navigation system. The optical detector 3' assumes position 13, such that it can detect over the load 7, as can be viewed from Figure 4. As the load carrier 2 lifts the load 7 up, the optical detector 3' detects any protruding feature of the rack. Protruding features can for example be a cargo 7' or a part of the racking 15. The optical analysing unit 4, together with the load carrier unit 5 takes measures in order to prevent a collision. These measures can be, stop the lifting process, alter the position of the load by controlling the drive motor of the fork-lift truck 1', or, if it is determined that the protrusions are so far extending that it is not possible to pass, the lifting process is replaced by lowering the cargo and a new position is taken by the fork-lift truck 1'.

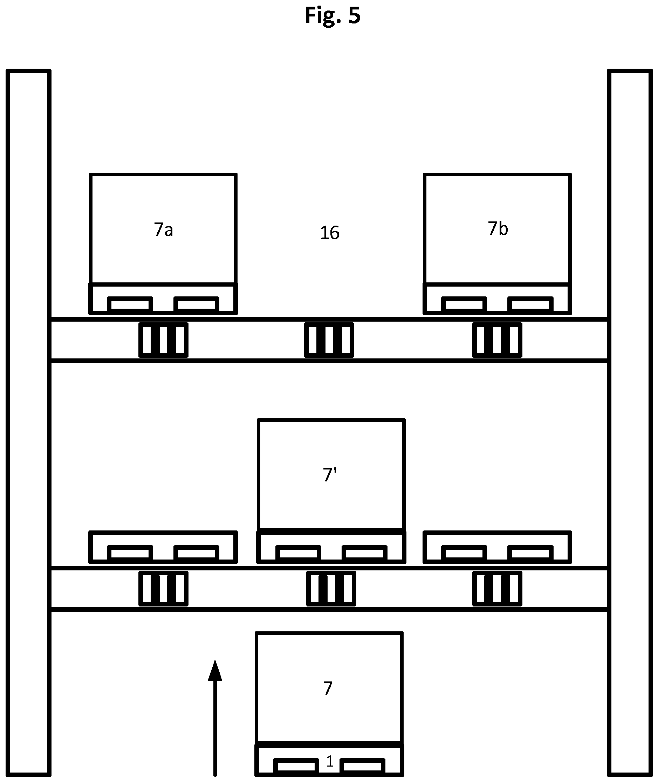

The fork-lift truck 1' can also be used for slot detection in a racking, see Figure 5. In a mode exactly the same as discussed above takes place. I.e. a cargo is lifted up and the optical detector 3' is in the second position 13. First, crash detection according to the above is performed and if the cargo 7' is determined not to protrude so as to prevent the lifting of the cargo on the load carrier, then lifting is performed. The optical detector 3' then, as the lifting progresses, detects if the cargo slot 16 where the load is to be delivered, is free. The optical detector 3' transfers an output to the optical analysing unit 4, 4'. The optical analysing unit 4, 4' determines if the slot 16 is free from any obstacle, e.g. a cargo 7A or 7B for example. If this is true the load 7 can be positioned in position 16, by approaching the racking and lowering the cargo on to slot 16. If the fork-lift truck 1' is operated manually the operator receives, for example, messages on a display device and can then himself adjust the position of the fork-lift truck 1' and the load carriers for delivering the load 7.

For all embodiments above it should be understood that they also can be applied for a manually operated fork-lift truck 1, 1'. The measures taken for moving the load carriers 2 can be replaced by, for example, displaying information of the need for the necessary movement to an operator, by means of a display device.

Thus a method of operating a forklift truck, where fork-lift truck 1, 1' comprises an optical detector 3, 3' with a first field of view, comprises the following steps:
- obtaining an output from the optical detector 3, 3', step 301
- identifying a first three-dimensional object in said field of view of the optical detector 3, 3' and determining its position, said first three-dimensional object being a load carrier 2 of the fork-lift truck 1, 1', based on the output from the optical detector 3, 3', step 302
- identifying a second three-dimensional object 7, 8 in said field of view of the optical detector 3, 3' and determining its position based on the output from the optical detector, step 303, and
- determining a three-dimensional relative position of the identified second three-dimensional object 7, 8 in relation to the position of the identified load carrier 2 based on the determined position of the load carrier 2 and the determined position of the second three-dimensional object, step 304.

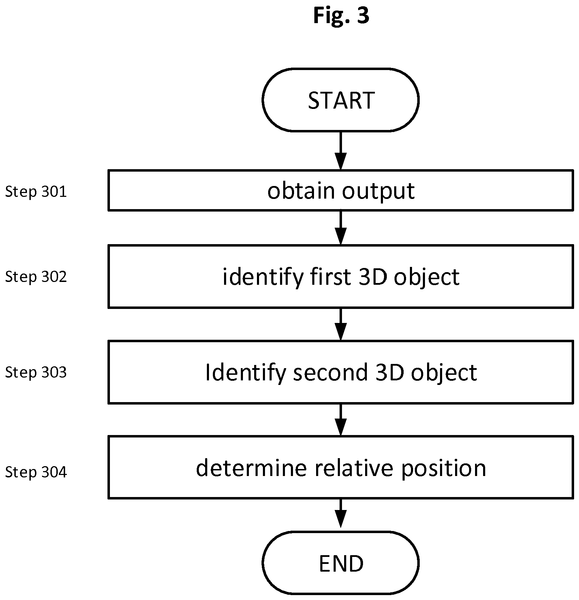

The method can be viewed in Figure 3. The steps are in general made in consecutive order. However it should be understood that the steps can be performed several times and that the second and the third step can alter order if necessary.

Further steps of the method are also possible:
Preferably the output from the optical detector is received by the optical analysing unit 4, 4'. A search is then performed by the optical analysing unit 4, 4' within a predetermined volume within the first field of view of the optical detector 3, 3' so as to identify the load carrier 2 and/or the second three-dimensional object 7, 8. Then the position of the load carrier 2 and/or the second three-dimensional object 7, 8 can be determined.

This means that in the optical analysing unit 4, 4' there is a predetermined value of the coordinates X, Y, Z that sets where to search for the first and second three-dimensional objects. Of course this predetermined value can be altered if needed, for example if the load is different or the load carriers 2 have an altered dimension.

One can also define a first predetermined volume within the first field of view of the optical detector 3, 3' and a second predetermined volume within the first field of view of the optical detector 3, 3'. The predetermined volumes can overlap depending on the circumstances. A search is then performed by the optical analysing unit 4, 4' within the first predetermined volume so as to identify the load carrier 2 and so as to determine the position of the load carrier. A search is also performed by the optical analysing unit 4, 4' within the second predetermined volume so as to identify the second three-dimensional object 7, 8 and so as to determine the position of the second three-dimensional object 7, 8.

This means that several predetermined volumes can be stored in the optical analysing unit 4, 4', thus giving the possibility to assess more quickly and with better precision different objects.

Further steps are also possible:
- calculating a difference between the determined three-dimensional relative position of the identified second three-dimensional object 7, 8 and a predetermined three-dimensional relative position of the identified second three-dimensional object 7, 8,
- applying the calculated difference to a load carrier control unit 5, and
- controlling by means of the load carrier control unit 5 repositioning of the load carrier 2 based on the calculated difference.

These steps allow that an automatic repositioning of the load carrier 2 can be performed. For example, in case a load 7, 8 with a pallet 8 should be loaded, a predetermined three-dimensional relative position could be a position where the forks are positioned at a certain distance in the longitudinal extension of the pallet tunnels 9. Having an actual three-dimensional relative position between the forks and the pallet tunnels 9 the load carrier control unit could then reposition the load carrier 2 so that they obtain the predetermined relative position and that the truck then can move forward so that the load carrier 2 enters the pallet tunnel 9 and the load can be loaded.

Further steps, independently of the above, are possible:
- starting a lifting procedure of the load carrier 2 and during this process detect within the second field of view 13, or the first field of view including the space above the second three-dimensional object 7, 8, by the optical detector 3' whether any object protrudes in the lifting path such that it can collide with the load carrier 2 or the load 7, 8, and
- if a protruding object is detected, taking measures and/or alarming in order to prevent a collision

Thereby a method for collision avoidance between the load and objects above the load is achieved.

Thus a safer truck can be achieved. It must be understood that the last two steps can be performed before or independently of the three steps before that. That is a load that has been picked up by another method as the one here described can still make use of the method regarding collision avoidance.

Further steps, independently of the above, are possible:
- approaching a predetermined position where a load 7, 8 is to be delivered,
- optionally attaining the second position and/or orientation with the second field of view 13 by the optical detector 3',
- detecting a slot 16 where the load is to be delivered within the second field of view 13 or the first field of view including the space above the second three-dimensional object,
- determining by means of said at least optical analysing unit 4, 4' whether the slot 16 allows delivering or not depending on if the slot 16 is empty, contains a load, or there are other obstructing means in this slot 16, and
- if it is determined in the previous step to allow delivery, providing a visual indication or positioning the cargo 7 in the empty slot 16.

With the above steps a method is achieved which allows for safe delivery of a load. The optional step should be performed in case the field of view of the optical detector 3' does not allow detecting what happens in front of load, for example, because the field of view is oriented in such a way that the load covers to see what happens in front of it. In the step of determining whether the slot 16 allows delivering it is in one example assumed that the slot 16 allows delivery in case the slot 16 is empty and contains no load and no other obstructing means. The step of approaching a predetermined position where a load 7, 8 is to be delivered comprises in one example lifting the load carrier 2. Especially if the place where the load is to be delivered is not close to the ground, such as in Fig. 5 where the slot is, loosely speaking, three levels up, a lifting of the load carrier might be required. This is in one example needed to lift the optical detector so that it can detect the slot 16. Therefore, the step of approaching a predetermined position where a load 7, 8 is to be delivered is done in such way that it, later on, enables performing the step of detecting a slot 16 where the load is to be delivered within the second field of view 13 or the first field of view including the space above the second three-dimensional object.

The lifting procedure can be performed automatically by an autonomous fork-lift truck 1, for example via a load carrier control unit 5. An operator of a manually driven fork-lift truck can, for example, instead use a height pre-selection. By giving a specific input command, for example a specific height or a specific level of shelf in case the shelves have predetermined heights which are stored in the truck, the operator can then give cause to an automatic lifting of the load carrier 2 according to the input command. It is important that the truck has the information of the height of the slot 16, for example via the operator or via the autonomous system operating the truck, so that another object 7' placed under the slot 16 is not mistakenly identified as occupying the slot 16.

It is also possible to modify an existing fork-lift truck to the above discussed embodiments and to perform the discussed methods.

The methods described above are preferably performed by software in the optical analysing unit 4, 4', the load carrier control unit 5, and/or the main control unit 6, of the fork-lift truck 1, 1'.

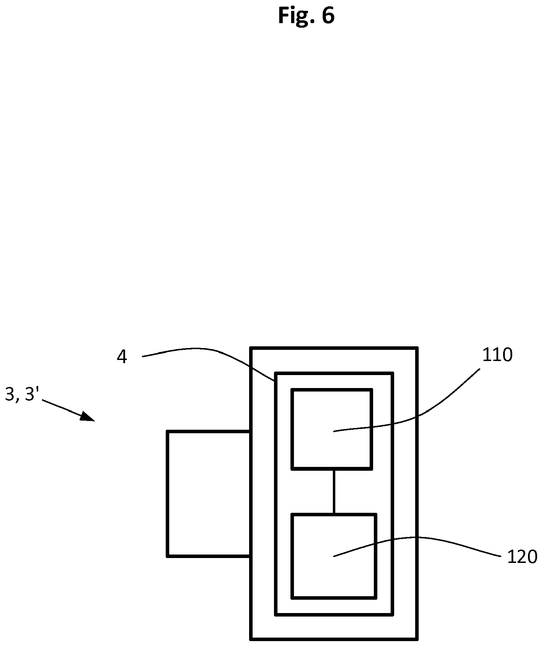

Turning now to figure 6, a schematic diagram is disclosed illustrating an exemplary embodiment of an optical detector 3. The optical detector 3 comprises a processor 110 and a memory 120, the memory 120 containing instructions executable by the processor 110. The processor 110 is a Central Processing Unit, CPU, microcontroller, Digital Signal Processor, DSP, or any other suitable type of processor capable of executing computer program code. The memory 120 is a Random Access Memory, RAM, a Read Only Memory, ROM, or a persistent storage, e.g. a single or combination of magnetic memory, optical memory, or solid state memory or even remotely mounted memory.

The processor 110 and the memory 120 of the optical analysing unit 4, are here disclosed as being situated in the optical detector 3, but the optical analysing unit 4' with the processor 110' and the memory 120' can also be located in a body of a fork-lift truck 1, 1', see fig 1, 2. In another embodiment of the present disclosure, the processor 110 and the memory 120 is an external unit. This means that the fork-lift truck 1, 1' must communicate with the processor 110 and the memory 120 by means of a communication device (not shown). This can preferably be a wire-less link. The communication device comprises in this embodiment an antenna.

According to one aspect, the disclosure further relates to a computer program, comprising computer readable code which, when run on the fork-lift truck 1, 1' causes the fork-lift truck 1, 1' to perform any of the aspects of the methods described above.

When the above-mentioned computer program code is run in the processor 110 of the fork-lift truck 1, 1' in the optical analysing unit 4, 4' it causes the fork-lift truck 1, 1' to perform the steps of the disclosed methods.

## Claims

1. A fork-lift truck (1, 1') comprising
- a load carrier (2),
- an optical detector (3, 3') having a first field of view and arranged to provide an output, wherein the optical detector (3, 3') is movable together with the load carrier (2),
- an optical analysing unit (4, 4') arranged to analyse the output from said optical detector (3, 3'),
**characterized in that** the optical analysing unit (4, 4') is arranged to analyse the output from the optical detector (3, 3') so as to
- identify a first three-dimensional object, said first three-dimensional object being the load carrier (2), and a second three-dimensional object based on the output from the optical detector (3, 3'), and
- determine the three-dimensional position of the identified load carrier (2) relative to the identified second three-dimensional object.

2. Fork-lift truck (1, 1') according to claim 1, wherein said optical detector (3, 3') is a 3D camera arranged to output three-dimensional data, preferably a 3D-camera working on the time-of-flight principle.

3. Fork-lift truck (1, 1') according to any of the preceding claims, wherein the optical analysing unit (4, 4') is integrated into the optical detector (3, 3').

4. Fork-lift truck (1, 1') according to any of the claims 1-2, wherein the optical analysing unit (4, 4') is comprised within a master control unit (6) of the fork-lift truck (1, 1').

5. Fork-lift truck (1, 1') according to any of the preceding claims, wherein said load carrier (2) comprises at least one fork.

6. Fork-lift truck (1, 1') according to any of the preceding claims, wherein the optical detector (3, 3') is positioned on a rear part of the load carrier (2) adjacent to a mast (11) or a fork-lift truck body (10) of the fork-lift truck (1, 1').

7. Fork-lift truck (1, 1') according to any of the preceding claims, further comprising a load carrier control unit (5) operatively connected to the optical analysing unit (4, 4') and arranged to adjust the position of the load carrier (2) based on the determined three-dimensional position of the identified load carrier (2) relative to the identified second three-dimensional object.

8. Fork-lift truck (1, 1') according to claim 7, wherein the load carrier control unit (5) is arranged to adjust the position of the load carrier (2) in all three-dimensions if needed, preferably in a direction that is transversal to the fork-lift truck body and/or in the longitudinal direction and/or the height direction relative to said second three-dimensional object.

9. Fork-lift truck (1, 1') according to claim 7 or 8, wherein the load carrier control unit (5) is comprised within a master control unit (6) of the fork-lift truck (1, 1').

10. Fork-lift truck (1, 1') according to any of the preceding claims, wherein the second three-dimensional object is a load (7, 8).

11. Fork-lift truck (1, 1') according to claim 10, wherein the optical analysing unit (4, 4') is arranged to identify a predetermined section of the load (7, 8), such as a pallet (8) and/or at least one pallet tunnel (9).

12. Fork-lift truck (1, 1') according to any of the preceding claims, wherein the optical detector (3') is arranged to be movable in relation to the load carrier (2) between a first position and/or orientation with the first field of view (14) and a second position and/or orientation with a second field of view (13), where the second field of view (13) includes a space above the second three-dimensional object such that in the second field of view (13) objects can be detected which are outside the first field of view (14), or, alternatively, the first field of view includes a space above the second three-dimensional object and wherein the position of the load carrier (2) is detectable in the first field of view when the second three-dimensional object is not present on the load carrier (2).

13. Method of operating a fork-lift truck (1, 1'), said fork-lift truck (1, 1') comprising an optical detector (3, 3') having a first field of view, said method comprising the step of:
- obtaining an output from the optical detector (3, 3');
said method being **characterized by** further comprising the steps of:
- identifying a first three-dimensional object in said field of view of the optical detector (3, 3') and determining its position, said first three-dimensional object being a load carrier (2) of the fork-lift truck (1, 1'), based on the output from the optical detector (3, 3'),
- identifying a second three-dimensional object (7, 8) in said field of view of the optical detector (3, 3') and determining its position based on the output from the optical detector, and
- determining a three-dimensional relative position of the identified second three-dimensional object (7, 8) in relation to the position of the identified load carrier (2) based on the determined position of the load carrier (2) and the determined position of the second three-dimensional object.

14. Method according to claim 13, wherein the output from the optical detector is received by at least one optical analysing unit (4, 4'), wherein a predetermined volume is within said first field of view of the optical detector (3, 3'), and where a search is performed by said at least one optical analysing unit (4, 4') within said predetermined volume so as to identify said load carrier (2) and/or second three-dimensional object (7, 8) and so as to determine the position of said load carrier (2) and/or second three-dimensional object (7, 8).

15. Method according to claim 13, wherein the output from the optical detector is received by at least one optical analysing unit (4, 4'),
wherein a first predetermined volume is within said first field of view of the optical detector (3, 3') and where a search is performed by said at least one optical analysing unit (4, 4') within said first predetermined volume so as to identify said load carrier (2) and so as to determine the position of said load carrier (2), and
wherein a second predetermined volume is within said first field of view of the optical detector (3, 3') and where a search is performed by said at least one optical analysing unit (4, 4') within said second predetermined volume so as to identify said second three-dimensional object (7, 8) and so as to determine the position of said second three-dimensional object (7, 8).

16. Method according to any of the claims 13-15, wherein the following steps are comprised:
- calculating a difference between said determined three-dimensional relative position of the identified second three-dimensional object (7, 8) and a predetermined three-dimensional relative position of the identified second three-dimensional object (7, 8),
- applying the calculated difference to a load carrier control unit (5), and
- controlling by means of the load carrier control unit (5) repositioning of the load carrier (2) based on the calculated difference.

17. Method of operating a fork-lift truck (1') according to any of the claims 13-16, wherein the optical detector (3') is arranged to be movable in relation to the load carrier (2) between a first position and/or orientation with the first field of view (14) and a second position and/or orientation with a second field of view (13), such that in the second field of view (13) objects can be detected which are outside the first field of view (14),
or, alternatively, the first field of view includes a space above the second three-dimensional object (7, 8) and wherein the position of the load carrier (2) is detectable when the second three-dimensional object (7, 8) is not present on the load carrier (2), said method further comprising the steps of:
- starting a lifting procedure of the load carrier (2) and during this process detect within the second field of view (13), or the first field of view including the space above the second three-dimensional object (7, 8), by the optical detector (3') whether any object protrudes in the lifting path such that it can collide with the load carrier (2) or the load (7, 8), and
- if a protruding object is detected, taking measures and/or alarming in order to prevent a collision.

18. Method of operating a fork-lift truck (1') according to any of the claims 13-17, wherein the optical detector (3') is arranged to be movable in relation to the load carrier (2) between a first position and/or orientation with the first field of view (14) and a second position and/or orientation with a second field of view (13), such that in the second field of view (13) objects can be detected which are outside the first field of view (14),
or, alternatively, the first field of view includes a space above the second three-dimensional object (7, 8) and wherein the position of the load carrier (2) is detectable when the second three-dimensional object (7, 8) is not present on the load carrier (2), said method further comprising the steps of:
- approaching a predetermined position where a load (7, 8) is to be delivered,
- optionally attaining the second position and/or orientation with the second field of view (13) by the optical detector (3'),
- detecting a slot (16) where the load is to be delivered within the second field of view (13) or the first field of view including the space above the second three-dimensional object,
- determining by means of said at least optical analysing unit (4, 4') whether the slot (16) allows delivering or not depending on if the slot (16) is empty, contains a load, or there are other obstructing means in this slot (16), and
- if it is determined in the previous step to allow delivery, providing a visual indication or positioning the cargo (7) in the empty slot (16).

19. Method of modifying a fork-lift truck comprising the steps of
- providing a fork-lift truck,
- providing an optical detector (3, 3'),
- providing an optical analysing unit (4, 4'),
- applying the optical detector (3, 3') and said optical analysing unit (4, 4') to said forklift truck (1, 1') such that a forklift truck (1, 1') according to any of the claims 1 - 12 is provided.

20. Computer program product that, when executed in an optical analysing unit (4, 4') of a fork-lift truck (1, 1') or an optical analysing unit (4, 4') together with a load carrier control unit (5) of a fork lift truck (1, 1'), executes the method according to any of the claims 13 -18.

## Patentansprüche

1. Gabelstapler (1, 1') aufweisend:
- einen Lastträger (2),
- einen optischen Detektor (3, 3') mit einem ersten Sichtfeld, der so angeordnet ist, dass er eine Ausgabe vorsieht, wobei der optische Detektor (3, 3') zusammen mit dem Lastträger (2) bewegbar ist,
- eine optische Analyseeinheit (4, 4'), die angeordnet ist, um die Ausgabe von dem optischen Detektor (3, 3') zu analysieren,
**dadurch gekennzeichnet, dass** die optische Analyseeinheit (4, 4') angeordnet ist, um die Ausgabe des optischen Detektors (3, 3') zu analysieren, um
- ein erstes dreidimensionales Objekts zu identifizieren, wobei das erste dreidimensionale Objekt der Lastträger (2) ist, und ein zweites dreidimensionales Objekt auf der Grundlage der Ausgabe des optischen Detektors (3, 3'), und
- die dreidimensionale Position des identifizierten Lastträgers (2) relativ zu dem identifizierten zweiten dreidimensionalen Objekt zu bestimmen.

2. Gabelstapler (1, 1') nach Anspruch 1, wobei der optische Detektor (3, 3') eine 3D-Kamera ist, die angeordnet ist, um dreidimensionale Daten auszugeben, vorzugsweise eine 3D-Kamera, die nach dem Time-of-Flight Prinzip arbeitet.

3. Gabelstapler (1, 1') nach einem der vorhergehenden Ansprüche, wobei die optische Analyseeinheit (4, 4') in den optischen Detektor (3, 3 ') integriert ist.

4. Gabelstapler (1, 1 ') nach einem der Ansprüche 1 bis 2, wobei die optische Analyseeinheit (4, 4') innerhalb einer Master-Steuereinheit (6) des Gabelstaplers (1, 1') umfasst ist.

5. Gabelstapler (1, 1 ') nach einem der vorhergehenden Ansprüche, wobei der Lastträger (2) zumindest eine Gabel umfasst.

6. Gabelstapler (1, 1') nach einem der vorhergehenden Ansprüche, wobei der optische Detektor (3, 3') an einem hinteren Teil des Lastträgers (2) neben einem Mast (11) oder einem Gabelstaplerkörper (10) des Gabelstaplers (1, 1') angeordnet ist.

7. Gabelstapler (1, 1') nach einem der vorhergehenden Ansprüche, ferner aufweisend eine Lastträger-Steuereinheit (5), die betriebsfähig mit der optischen Analyseeinheit (4, 4') verbunden ist, und angeordnet ist, um die Position des Lastträgers (2) auf der Grundlage der bestimmten dreidimensionalen Position des identifizierten Lastträgers (2) relativ zu dem identifizierten zweiten dreidimensionalen Objekt anzupassen.

8. Gabelstapler (1, 1') nach Anspruch 7, wobei die Lastträger-Steuereinheit (5) angeordnet ist, um die Position des Lastträgers (2) falls nötig in allen drei Dimensionen anzupassen, vorzugsweise in einer Richtung, die quer zum Gabelstaplerkörper ist und/oder in der Längsrichtung und/oder der Höhenrichtung relativ zu dem zweiten dreidimensionalen Objekt.

9. Gabelstapler (1, 1') nach Anspruch 7 oder 8, wobei die Lastträger-Steuereinheit (5) innerhalb einer Master-Steuereinheit (6) des Gabelstaplers (1, 1') umfasst ist.

10. Gabelstapler (1, 1') nach einem der vorhergehenden Ansprüche, wobei das zweite dreidimensionale Objekt eine Last (7, 8) ist.

11. Gabelstapler (1, 1') nach Anspruch 10, wobei die optische Analyseeinheit (4, 4') angeordnet ist, um einen vorbestimmten Abschnitt der Last (7, 8) zu identifizieren, wie zum Beispiel eine Palette (8) und/oder zumindest eine Palettenaussparung (9).

12. Gabelstapler (1, 1') nach einem der vorhergehenden Ansprüche, wobei der optische Detektor (3') bezüglich des Lastträgers (2) zwischen einer ersten Position und/oder Orientierung mit dem ersten Sichtfeld (14) und einer zweiten Position und/oder Orientierung mit einem zweiten Sichtfeld (13) beweglich angeordnet ist, wobei das zweite Sichtfeld (13) einen Raum oberhalb des zweiten dreidimensionalen Objekts aufweist, so dass in dem zweiten Sichtfeld (13) Objekte detektiert werden, können die außerhalb des ersten Sichtfeldes (14) liegen, oder alternativ das erste Sichtfeld einen Raum oberhalb des zweiten dreidimensionalen Objekts aufweist und wobei die Position des Lastträgers (2) im ersten Sichtfeld detektierbar ist, wenn das zweite dreidimensionale Objekt nicht an dem Lastträger (2) vorhanden ist.

13. Verfahren zum Betreiben eines Gabelstaplers (1, 1'), wobei der Gabelstapler (1, 1') einen optischen Detektor (3, 3') mit einem ersten Sichtfeld aufweist, wobei das Verfahren den Schritt aufweist:
- Erhalten einer Ausgabe des optischen Detektors (3, 3'), wobei das Verfahren **dadurch gekennzeichnet ist, dass** es ferner die folgenden Schritte aufweist:
- Identifizieren eines ersten dreidimensionalen Objekts in dem Sichtfeld des optischen Detektors (3, 3') und Bestimmen seiner Position, wobei das erste dreidimensionale Objekt ein Lastträger (2) des Gabelstaplers (1, 1') ist, auf der Grundlage der Ausgabe des optischen Detektors (3, 3'),
- Identifizieren eines zweiten dreidimensionalen Objekts (7, 8) in dem Sichtfeld des optischen Detektors (3, 3') und Bestimmen seiner Position auf der Grundlage der Ausgabe des optischen Detektors, und
- Bestimmen einer dreidimensionalen relativen Position des identifizierten zweiten dreidimensionalen Objekts (7, 8) bezüglich der Position des identifizierten Lastträgers (2) auf der Grundlage der bestimmten Position des Lastträgers (2) und der bestimmten Position des zweiten dreidimensionalen Objekts.

14. Verfahren nach Anspruch 13 wobei die Ausgabe des optischen Detektors von zumindest einer optischen Analyseeinheit (4, 4') empfangen wird, wobei ein vorbestimmtes Volumen innerhalb des ersten Sichtfeldes des optischen Detektors (3, 3) liegt, und wobei eine Suche innerhalb des vorbestimmten Volumens durch die zumindest eine optische Analyseeinheit (4, 4') ausgeführt wird, um den Lastträger (2) und/oder das zweite dreidimensionale Objekt (7, 8) zu identifizieren, und um die Position des Lastträgers (2) und/oder des zweiten dreidimensionalen Objekts (7, 8) zu bestimmen.

15. Verfahren nach Anspruch 13, wobei die Ausgabe des optischen Detektors von mindestens einer optischen Analyseeinheit (4, 4') empfangen wird,
wobei ein erstes vorbestimmtes Volumen innerhalb des ersten Sichtfeldes des optischen Detektors (3, 3 ') liegt und wo eine Suche durch die zumindest eine optische Analyseeinheit (4, 4') innerhalb des ersten vorbestimmten Volumens durchgeführt wird, um den Lastträger (2) zu identifizieren und um die Position des Lastträgers (2) zu bestimmen, und wobei ein zweites vorbestimmtes Volumen innerhalb des ersten Sichtfeldes des optischen Detektors (3, 3') liegt und wo eine Suche durch die zumindest eine optische Analyseeinheit (4, 4') innerhalb des zweiten vorbestimmten Volumens durchgeführt wird, um das zweite dreidimensionale Objekt (7, 8) zu identifizieren und um die Position des zweiten dreidimensionalen Objekts (7, 8) zu bestimmen.

16. Verfahren nach einem der Ansprüche 13 bis 15, wobei das Verfahren die folgenden Schritte aufweist:
- Berechnen eines Unterschieds zwischen der bestimmten dreidimensionalen relativen Position des identifizierten zweiten dreidimensionalen Objekts (7, 8) und einer vorbestimmten dreidimensionalen relativen Position des identifizierten zweiten dreidimensionalen Objekts (7, 8),
- Aufbringen der berechneten Differenz auf eine Lastträger-Steuereinheit (5), und
- Steuern der Neupositionierung des Lastträgers (2) mittels der Lastträger-Steuereinheit (5) auf der Grundlage der berechneten Differenz.

17. Verfahren zum Betreiben eines Gabelstaplers (1') nach einem der Ansprüche 13 bis 16, wobei der optische Detektor (3') bezüglich des Lastträgers (2) zwischen einer ersten Position und/oder Orientierung mit dem ersten Sichtfeld (14) und einer zweiten Position und/oder Orientierung mit einem zweiten Sichtfeld (13) beweglich angeordnet ist, so dass in dem zweiten Sichtfeld (13) Objekte detektiert werden können, die außerhalb des ersten Sichtfelds (14) liegen, oder alternativ das erste Sichtfeld einen Raum oberhalb des zweiten dreidimensionalen Objekts (7, 8) aufweist und wobei die Position des Lastträgers (2) detektierbar ist, wenn das zweite dreidimensionale Objekt (7, 8) nicht an dem Lastträger (2) vorhanden ist, wobei das Verfahren ferner die folgenden Schritte aufweist:
- Starten eines Hubvorgangs des Lastträgers (2) und während dieses Vorgangs Detektieren durch den optischen Detektor (3') innerhalb des zweiten Sichtfeldes (13), oder des ersten Sichtfelds, das den Raum über dem zweiten dreidimensionalen Objekt (7, 8) aufweist, ob ein Objekt so in den Hubweg vorsteht, dass es mit dem Lastträger (2) oder der Last (7, 8) kollidieren kann und
- wenn ein vorstehendes Objekt erkannt wird, Ergreifen von Maßnahmen und/oder Alarmieren, um eine Kollision zu verhindern.

18. Verfahren zum Betreiben eines Gabelstaplers (1') nach einem der Ansprüche 13 bis 17, wobei der optische Detektor (3') bezüglich des Lastträgers (2) zwischen einer ersten Position und/oder Orientierung mit dem ersten Sichtfeld (14) und einer zweiten Position und/oder Orientierung mit einem zweiten Sichtfeld (13) beweglich angeordnet ist, so dass in dem zweiten Sichtfeld (13) Objekte detektiert werden können, die außerhalb des ersten Sichtfelds (14) liegen,
oder alternativ das erste Sichtfeld einen Raum oberhalb des zweiten dreidimensionalen Objekts (7, 8) aufweist und wobei die Position des Lastträgers (2) detektierbar ist, wenn das zweite dreidimensionale Objekt (7, 8) nicht an dem Lastträger (2) vorhanden ist, wobei das Verfahren ferner die folgenden Schritte aufweist:
- Annähern an eine vorbestimmte Position, an der eine Last (7, 8) zugestellt werden soll,
- optional Erreichen der zweiten Position und/oder Orientierung mit dem zweiten Sichtfeld (13) durch den optischen Detektor (3'),
- Detektieren einer Position (16), wo die Last innerhalb des zweiten Sichtfeldes (13) oder des ersten Sichtfeldes einschließlich des Raumes über dem zweiten dreidimensionalen Objekt zugestellt werden soll,
- Bestimmen mittels der zumindest einen optischen Analyseeinheit (4, 4'), ob die Position (16) eine Zustellung zulässt oder nicht, in Abhängigkeit davon, ob die Position (16) leer ist, eine Last enthält oder es andere Behinderungen in dieser Position (16) gibt, und
- wenn es im vorherigen Schritt bestimmt wird, die Zustellung zuzulassen, Vorsehen einer visuellen Anzeige oder Positionieren der Ladung (7) in der leeren Position (16).

19. Verfahren zum Modifizieren eines Gabelstaplers umfassend die Schritte:
- Bereitstellung eines Gabelstaplers,
- Bereitstellen eines optischen Detektors (3, 3'),
- Bereitstellen einer optischen Analyseeinheit (4, 4'),
- Aufbringen des optischen Detektors (3, 3 ') und der optischen Analyseeinheit (4, 4') an dem Gabelstapler (1, 1'), so dass ein Gabelstapler (1, 1') nach einem der Ansprüche 1 bis 12 vorgesehen ist.

20. Computerprogrammprodukt, das, wenn es in einer optischen Analyseeinheit (4, 4') eines Gabelstaplers (1, 1') oder einer optischen Analyseeinheit (4, 4') zusammen mit einer Lastträger-Steuereinheit (5) eines Gabelstaplers (1, 1') ausgeführt wird, das Verfahren nach einem der Ansprüche 13 bis 18 ausführt.

## Revendications

1. Chariot élévateur à fourche (1, 1') comprenant :
- un support de charge (2),
- un détecteur optique (3, 3') ayant un premier champ de vision et agencé pour fournir une sortie, dans lequel le détecteur optique (3, 3') peut être déplacé avec le support de charge (2),
- une unité d'analyse optique (4, 4') agencée pour analyser la sortie dudit détecteur optique (3, 3'),
**caractérisé en ce que** l'unité d'analyse optique (4, 4') est agencée pour analyser la sortie du détecteur optique (3, 3') de manière à
- identifier un premier objet tridimensionnel, ledit premier objet tridimensionnel étant le support de charge (2), et un deuxième objet tridimensionnel sur la base de la sortie du détecteur optique (3, 3'), et
- déterminer la position tridimensionnelle du support de charge (2) identifié par rapport au deuxième objet tridimensionnel identifié.

2. Chariot élévateur à fourche (1, 1') selon la revendication 1, dans lequel ledit détecteur optique (3, 3') est une caméra 3D agencée pour délivrer des données tridimensionnelles, de préférence une caméra 3D fonctionnant sur le principe du temps de vol.

3. Chariot élévateur à fourche (1, 1') selon l'une quelconque des revendications précédentes, dans lequel l'unité d'analyse optique (4, 4') est intégrée dans le détecteur optique (3, 3').

4. Chariot élévateur à fourche (1, 1') selon l'une quelconque des revendications 1 et 2, dans lequel l'unité d'analyse optique (4, 4') est comprise dans une unité de commande maître (6) du chariot élévateur à fourche (1, 1').

5. Chariot élévateur à fourche (1, 1') selon l'une quelconque des revendications précédentes, dans lequel ledit support de charge (2) comprend au moins une fourche.

6. Chariot élévateur à fourche (1, 1') selon l'une quelconque des revendications précédentes, dans lequel le détecteur optique (3, 3') est positionné sur une partie arrière du support de charge (2) adjacent à un mât (11) ou à une carrosserie de chariot élévateur à fourche (10) du chariot élévateur à fourche (1, 1').

7. Chariot élévateur à fourche (1, 1') selon l'une quelconque des revendications précédentes, comprenant en outre une unité de commande de support de charge (5) connectée de manière fonctionnelle à l'unité d'analyse optique (4, 4') et agencée pour ajuster la position du support de charge (2) sur la base de la position tridimensionnelle déterminée du support de charge identifié (2) par rapport au deuxième objet tridimensionnel identifié.

8. Chariot élévateur à fourche (1, 1') selon la revendication 7, dans lequel l'unité de commande de support de charge (5) est agencée pour ajuster la position du support de charge (2) dans les trois dimensions si nécessaire, de préférence dans une direction qui est transversale à la carrosserie de chariot élévateur à fourche et/ou dans la direction longitudinale et/ou la direction de hauteur par rapport audit deuxième objet tridimensionnel.

9. Chariot élévateur à fourche (1, 1') selon la revendication 7 ou 8, dans lequel l'unité de commande de support de charge (5) est comprise dans une unité de commande maître (6) du chariot élévateur à fourche (1, 1').

10. Chariot élévateur à fourche (1, 1') selon l'une quelconque des revendications précédentes, dans lequel le deuxième objet tridimensionnel est une charge (7, 8).

11. Chariot élévateur à fourche (1, 1') selon la revendication 10, dans lequel l'unité d'analyse optique (4, 4') est agencée pour identifier une section prédéterminée de la charge (7, 8), telle qu'une palette (8) et/ou au moins un tunnel de palette (9).

12. Chariot élévateur à fourche (1, 1') selon l'une quelconque des revendications précédentes, dans lequel le détecteur optique (3') est agencé pour pouvoir être déplacé en relation avec le support de charge (2) entre une première position et/ou orientation avec le premier champ de vision (14) et une deuxième position et/ou orientation avec un deuxième champ de vision (13), où le deuxième champ de vision (13) comprend un espace au-dessus du deuxième objet tridimensionnel de sorte que, dans le deuxième champ de vision (13), des objets qui sont à l'extérieur du premier champ de vision (14) peuvent être détectés, ou, en variante, le premier champ de vision comprend un espace au-dessus du deuxième objet tridimensionnel et dans lequel la position du support de charge (2) peut être détectée dans le premier champ de vision lorsque le deuxième objet tridimensionnel n'est pas présent sur le support de charge (2).

13. Procédé pour mettre en oeuvre un chariot élévateur à fourche (1, 1'), ledit chariot élévateur à fourche (1, 1') comprenant un détecteur optique (3, 3') ayant un premier champ de vision, ledit procédé comprenant l'étape :
- d'obtention d'une sortie du détecteur optique (3, 3') ;
ledit procédé étant **caractérisé en ce qu'**il comprend en outre les étapes :
- d'identification d'un premier objet tridimensionnel dans ledit champ de vision du détecteur optique (3, 3') et de détermination de sa position, ledit premier objet tridimensionnel étant un support de charge (2) du chariot élévateur à fourche (1, 1'), sur la base de la sortie du détecteur optique (3, 3'),
- d'identification d'un deuxième objet tridimensionnel (7, 8) dans ledit champ de vision du détecteur optique (3, 3') et de détermination de sa position sur la base de la sortie du détecteur optique, et
- de détermination d'une position relative tridimensionnelle du deuxième objet tridimensionnel (7, 8) identifié en relation avec la position du support de charge (2) identifié sur la base de la position déterminée du support de charge (2) et de la position déterminée du deuxième objet tridimensionnel.

14. Procédé selon la revendication 13, dans lequel la sortie du détecteur optique est reçue par au moins une unité d'analyse optique (4, 4'), dans lequel un volume prédéterminé est dans ledit premier champ de vision du détecteur optique (3, 3'), et où une recherche est effectuée par ladite au moins une unité d'analyse optique (4, 4') dans ledit volume prédéterminé de manière à identifier ledit support de charge (2) et/ou ledit deuxième objet tridimensionnel (7, 8) et de manière à déterminer la position dudit support de charge (2) et/ou dudit deuxième objet tridimensionnel (7, 8).

15. Procédé selon la revendication 13, dans lequel la sortie du détecteur optique est reçue par au moins une unité d'analyse optique (4, 4'),
dans lequel un premier volume prédéterminé est dans ledit premier champ de vision du détecteur optique (3, 3') et où une recherche est effectuée par ladite au moins une unité d'analyse optique (4, 4') dans ledit premier volume prédéterminé de manière à identifier ledit support de charge (2) et de manière à déterminer la position dudit support de charge (2), et
dans lequel un deuxième volume prédéterminé est dans ledit premier champ de vision du détecteur optique (3, 3') et où une recherche est effectuée par ladite au moins une unité d'analyse optique (4, 4') dans ledit deuxième volume prédéterminé de manière à identifier ledit deuxième objet tridimensionnel (7, 8) et de manière à déterminer la position dudit deuxième objet tridimensionnel (7, 8).

16. Procédé selon l'une quelconque des revendications 13 à 15, dans lequel les étapes suivantes sont comprises :
- le calcul d'une différence entre ladite position relative tridimensionnelle déterminée du deuxième objet tridimensionnel (7, 8) identifié et une position relative tridimensionnelle prédéterminée du deuxième objet tridimensionnel (7, 8) identifié,
- l'application de la différence calculée à une unité de commande de support de charge (5), et
- la commande, au moyen de l'unité de commande de support de charge (5), du repositionnement du support de charge (2) sur la base de la différence calculée.

17. Procédé pour mettre en oeuvre un chariot élévateur à fourche (1') selon l'une quelconque des revendications 13 à 16, dans lequel le détecteur optique (3') est agencé pour pouvoir être déplacé en relation avec le support de charge (2) entre une première position et/ou orientation avec le premier champ de vision (14) et une deuxième position et/ou orientation avec un deuxième champ de vision (13), de sorte que, dans le deuxième champ de vision (13), des objets qui sont à l'extérieur du premier champ de vision (14) puissent être détectés,
ou, en variante, le premier champ de vision comprend un espace au-dessus du deuxième objet tridimensionnel (7, 8) et dans lequel la position du support de charge (2) peut être détectée lorsque le deuxième objet tridimensionnel (7, 8) n'est pas présent sur le support de charge (2), ledit procédé comprenant en outre les étapes :
- de démarrage d'une procédure de levage du support de charge (2) et, pendant ce processus, de détection dans le deuxième champ de vision (13), ou dans le premier champ de vision comprenant l'espace au-dessus du deuxième objet tridimensionnel (7, 8), par le détecteur optique (3') si un quelconque objet fait saillie dans le trajet de levage de sorte qu'il peut entrer en collision avec le support de charge (2) ou la charge (7, 8), et
- si un objet saillant est détecté, de prise de mesures et/ou d'alarme afin d'éviter une collision.

18. Procédé pour mettre en oeuvre un chariot élévateur à fourche (1') selon l'une quelconque des revendications 13 à 17, dans lequel le détecteur optique (3') est agencé pour pouvoir être déplacé en relation avec le support de charge (2) entre une première position et/ou orientation avec le premier champ de vision (14) et une deuxième position et/ou orientation avec un deuxième champ de vision (13), de sorte que, dans le deuxième champ de vision (13), des objets qui sont à l'extérieur du premier champ de vision (14) puissent être détectés,
ou, en variante, le premier champ de vision comprend un espace au-dessus du deuxième objet tridimensionnel (7, 8) et dans lequel la position du support de charge (2) peut être détectée lorsque le deuxième objet tridimensionnel (7, 8) n'est pas présent sur le support de charge (2),
ledit procédé comprenant en outre les étapes :
- d'approche d'une position prédéterminée où une charge (7, 8) doit être délivrée,
- d'atteinte, en option, de la deuxième position et/ou orientation avec le deuxième champ de vision (13) par le détecteur optique (3'),
- de détection d'un emplacement (16) où la charge doit être délivrée dans le deuxième champ de vision (13) ou le premier champ de vision comprenant l'espace au-dessus du deuxième objet tridimensionnel,
- de détermination, au moyen de ladite au moins une unité d'analyse optique (4, 4'), si l'emplacement (16) permet la distribution ou non selon que l'emplacement (16) est vide, contient une charge, ou qu'il existe d'autres moyens d'obstruction à cet emplacement (16), et
- s'il est déterminé, à l'étape précédente, de permettre la distribution, de fourniture d'une indication visuelle ou de positionnement du chargement (7) à l'emplacement vide (16).

19. Procédé de modification d'un chariot élévateur à fourche comprenant les étapes :
- de fourniture d'un chariot élévateur à fourche,
- de fourniture d'un détecteur optique (3, 3'),
- de fourniture d'une unité d'analyse optique (4, 4'),
- d'application du détecteur optique (3, 3') et de ladite unité d'analyse optique (4, 4') audit chariot élévateur à fourche (1, 1') de sorte qu'un chariot élévateur à fourche (1, 1') selon l'une quelconque des revendications 1 à 12 soit fourni.

20. Produit-programme d'ordinateur qui, lorsqu'il est exécuté dans une unité d'analyse optique (4, 4') d'un chariot élévateur à fourche (1, 1') ou dans une unité d'analyse optique (4, 4') avec une unité de commande de support de charge (5) d'un chariot élévateur à fourche (1, 1'), exécute le procédé selon l'une quelconque des revendications 13 à 18.
